# EUROPEAN PATENT APPLICATION

(11) **EP 4 553 963 A1**
(43) Date of publication of application: **14.05.2025**
(21) Application number: 23852780.8
(22) Date of filing: 19.07.2023
(51) Int. Cl.: H01M 50/105, H01M 50/119, H01M 50/169, H01M 50/367, H01M 50/24, H01M 10/658, H01M 10/647, H01M 10/6551, H01M 10/613, H01M 50/211

(54) **BATTERY MODULE, METHOD FOR MANUFACTURING SAME, AND BATTERY PACK**

(30) Priority: 10.08.2022 KR 20220100240; 10.08.2022 KR 20220100241; 15.05.2023 KR 20230062426
(71) Applicant: LG Energy Solution, Ltd., Seoul 07335 (KR)
(72) Inventor: JANG, Byung Do, Daejeon 34122 (KR); KIM, Ki Young, Daejeon 34122 (KR); LEE, Hyoung Suk, Daejeon 34122 (KR)
(74) Representative: Plasseraud IP
(86) International application number: PCT/KR2023/010432
(87) International publication number: WO 2024/034899

(57) **Abstract**

The present invention relates to a battery module, which is capable of improving production efficiency by reducing the number of parts and simplifying an assembly process to efficiently prevent thermal propagation between cells, and a battery pack including the same.

A battery module according to the present invention includes a cell unit assembly including a plurality of cell units, and an end frame configured to cover both ends of the cell unit assembly based on a longitudinal direction of the cell units, wherein the cell unit includes: a cell stack, in which at least one or more cells are stacked; and a cell cover configured to surround both side portions and an upper portion in a width direction of the cell stack.

## Description

### TECHNICAL FIELD

### CROSS-REFERENCE TO RELATED APPLICATION

The present application claims the benefit of the priority of Korean Patent Application Nos. 10-2022-0100240, filed on August 10, 2022, 10-2022-0100241, filed on August 10, 2022, and 10-2023-0062426, filed on May 15, 2023, which are hereby incorporated by reference in their entirety.

### TECHNICAL FIELD

The present invention relates to a battery module, a method of manufacturing the same, and a battery pack, and more specifically, to a secondary battery module including a plurality of cells, a method for manufacturing the same, and a battery pack including the battery module.

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated. That is, when the reduction reaction to the material is performed by the current, power is charged. When the oxidation reaction to the material is performed by the current, power is discharged. Such charging-discharging are repeatedly performed to generate electricity.

Recently, as the need for large-capacity structures in addition to the use as an energy storage source are increasing, demands for battery packs in which a plurality of secondary batteries or battery modules are aggregated is increasing, and thus, demands for battery modules are also increasing. For example, secondary batteries mounted in a vehicle, an energy storage system (ESS), and the like, the plurality of secondary batteries are coupled to increase in output and electricity storage so as to constitute battery modules, and then, the battery modules are coupled to constitute a pack.

The battery modules according to the related art may be manufactured by arranging a plurality of cells inside a frame and assembling the plurality of cells while blocking an opening of the frame using a stack plate and an end plate.

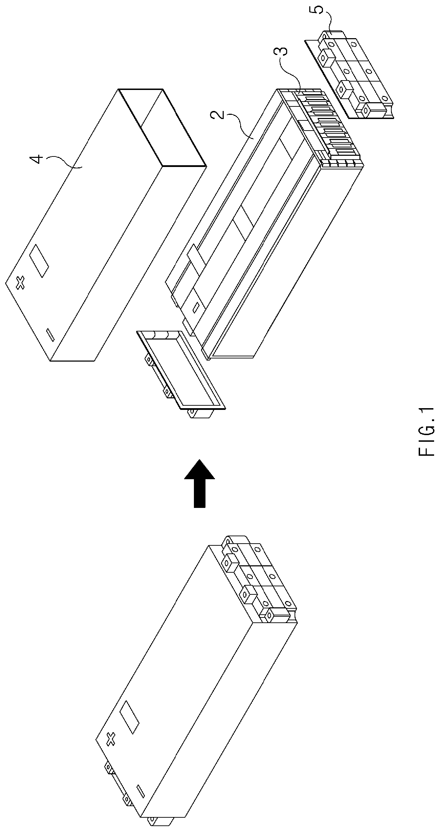

Referring to FIG. 1, which illustrates an appearance and disassembled appearance of a battery module having a conventional structure, secondary batteries are stacked and provided as a cell stack having a rectangular parallelepiped shape, and a stack plate 2 is covered on surfaces (selectively as needed), from which a positive electrode lead and a negative electrode lead do not protrude, among six surfaces defined by the rectangular parallelepiped shape, and a busbar frame 3 is covered on two surfaces from which the positive electrode lead and the negative electrode lead protrude. The positive and negative electrode leads are electrically connected to terminals (negative electrode terminal and positive electrode terminal) provided on the busbar frame 3.

In addition, a mono frame 4 provided in a cylindrical shape with both sides opened is coupled to cover the outside of the stack plate 2. In addition, the mono frame 4 is inserted so that the busbar frame 3 is exposed, and then, the end plate 5 is coupled to cover the busbar frame 3.

Each of the end plate 5 and mono frame 4 is made of a metal, and the end plate 5 and mono frame 4 are assembled by welding.

The battery module 1 according to the related art, which is manufactured in this manner may have a structure in which all surfaces of the cells are blocked, and thus, there is a limitation that when gas is discharged, or flame occurs, explosion may occur. That is, the battery module according to the related art has a limitation in that it does not effectively prevent thermal propagation between the cells disposed inside.

In addition, since the end plate 5 is coupled after the busbar frame 3 is coupled, there is a limitation of increasing in the number of assembly processes. That is, the battery modules according to the related art have a large number of parts and are complex to be assembled to deteriorate efficiency of a manufacturing process.

Thus, in order to solve this limitation, there is a need for a battery module that is capable of efficiency preventing thermal propagation between the cells while reducing the number of parts and simplifying the assembly process, and a battery pack including the same.

### DISCLOSURE OF THE INVENTION

### TECHNICAL PROBLEM

The present invention has been invented to solve the above problems, and an object of the present invention is to provide a battery module, which is capable of improving production efficiency by reducing the number of parts and simplifying an assembly process to efficiently prevent thermal propagation between cells, and a battery pack including the same.

### TECHNICAL SOLUTION

A battery module according to the present invention may include a cell unit assembly including a plurality of cell units, and an end frame configured to cover both ends of the cell unit assembly based on a longitudinal direction of the cell units, wherein the cell unit includes: a cell stack, in which at least one or more cells are stacked; and a cell cover configured to surround both side portions and an upper portion in a width direction of the cell stack.

The cell cover may include an upper plate disposed above the cell stack to cover a top surface of the cell stack, and a side plate connected to be bent from the upper plate to cover a side surface of the cell stack.

The side plate may be disposed to be in contact with the side surface of the cell stack.

A gas discharge hole may be defined in both ends of the upper plate based on the longitudinal direction.

The cell stack may include one or more and three or less cells.

The cell cover may be made of a metal material.

The cell cover may be disposed to be in contact with the end frame.

A portion of the cell cover, which is in contact with the end frame, may be welded.

The cell unit assembly may further include an insulating plate disposed between the adjacent cell units and comprising an insulating material.

Both ends of the insulating plate may be disposed to be in contact with the end frame based on the longitudinal direction.

A battery pack according to the present invention includes the battery module according to the present invention, and a cooling plate disposed below the plurality of battery modules, wherein the cooling plate may be configured to cover an opened lower portion of the battery module.

A battery module according to the present invention may include a cell stack in which a plurality of cells, from which an electrode lead protrudes from each of both ends in a longitudinal direction, are stacked, and an end frame to which an end plate coupled to each of both the ends of the cell stack and a busbar assembly which is coupled to the end plate and to which the electrode lead of each cell is electrically connected, are coupled.

The end frame may be coupled so that the end plate is disposed closer to the cell stack than the busbar assembly.

An opening hole through which the electrode lead passes may be defined in the end plate so that the electrode lead is connected to the busbar assembly through the opening hole.

A plurality of first holes may be punched in the busbar assembly, and the electrode lead may pass through each of the first holes so as to be electrically connected to a terminal provided on the busbar assembly.

A second hole which is spaced apart from the first hole and through which the electrode lead does not pass may be additionally defined in the busbar assembly.

The first hole may be provided to a size that is enough to provide an empty space after the electrode lead passes.

The bus bar assembly may be made of a synthetic resin material with relatively lower rigidity, and the end plate may be made of a metal material with relatively higher rigidity.

One side of the busbar assembly may be bent to provide a bent part, and the end plate may be bent to an opposite side of the bent part to provide a folded part.

A method for manufacturing a battery module according to the present invention may include a cell stack manufacturing process of manufacturing a cell stack by stacking cells, from which an electrode lead protrudes to each of both ends in a longitudinal direction, and a cell cover made of a metal material, an end frame manufacturing process of manufacturing an end frame to which an end plate made of a metal material and a busbar assembly which is coupled to the end plate and to which the electrode lead of each cell is electrically connected are coupled, and a coupling process of coupling the end frame to the cell stack by welding the end plate to the cell cover.

### ADVANTAGEOUS EFFECTS

The battery module according to the present invention may include the cell unit assembly including the plurality of cell units and the end frame covering both the ends of the cell unit assembly based on the longitudinal direction of the cell units, and the cell unit may include the cell stack, in which at least one or more cells are stacked, and the cell cover surrounding both the side portions and the upper portion in the width direction of the cell stack.

Thus, the number of parts that are required to manufacture the battery module may be reduced to improve the economic efficiency of the manufacturing process.

In addition, the efficiency of the manufacturing process may be improved by simplifying the assembly process of the battery module.

In addition, the thermal propagation between the cell units may be efficiently prevented to improve the stability of the battery module.

In addition, the secondary damage in which the gas leaks, or the flame leads to the thermal propagation may be prevented.

In addition, the energy density per volume of the battery module may increase by reducing the wasted space.

In addition, in the structure according to the related art, when the busbar assembly and the electrode lead are welded, and when the mono frame and the end plate are welded after the welding of the electrode lead is completed, the installation of the welding jig may be separately required (although the installation of the welding jig is required at least twice). However, in the present invention, when the cell cover and the end plate are welded, the busbar assembly and the electrode lead may also be welded at the same time, and thus, the number of times of installations and disassembly of the welding jigs may be reduced.

The effects of the prevent invention are not limited by the aforementioned description, and thus, more varied effects are involved in this specification.

### BRIEF DESCRIPTION OF THE DRAWINGS

FIG. 1 is a schematic perspective view and exploded perspective view of a battery module according to the related art.
FIG. 2 is a schematic perspective view illustrating a battery module according to Embodiment 1 of the present invention.
FIG. 3 is a schematic exploded perspective view of the battery module according to Embodiment 1 of the present invention.
FIG. 4 is a schematic perspective view illustrating a cell cover of the battery module according to Embodiment 1 of the present invention.
FIG. 5 is a schematic perspective view illustrating an end plate of the battery module according to Embodiment 1 of the present invention.
FIG. 6 is a schematic front view illustrating the battery module of FIG. 2.
FIG. 7 is a schematic perspective view illustrating a battery module according to Embodiment 2 of the present invention.

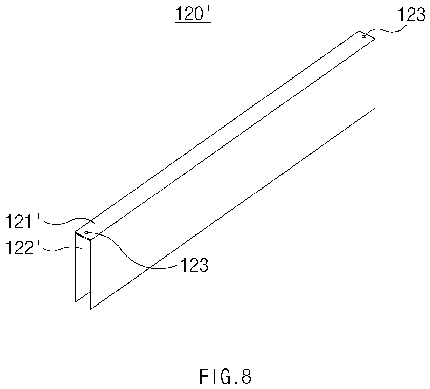

FIG. 8 is a schematic perspective view illustrating a cell cover of the battery module according to Embodiment 2 of the present invention.

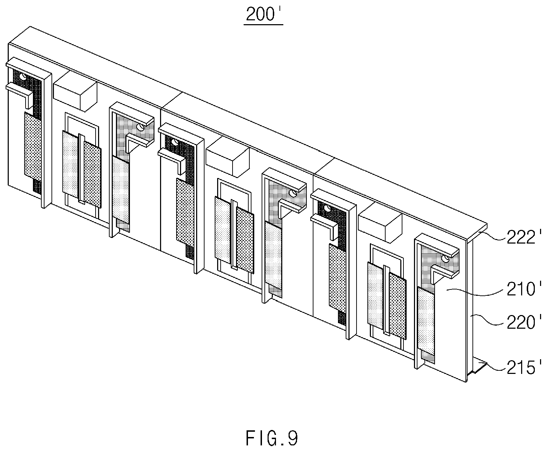

FIG. 9 is a schematic perspective view illustrating an end plate of the battery module according to Embodiment 2 of the present invention.

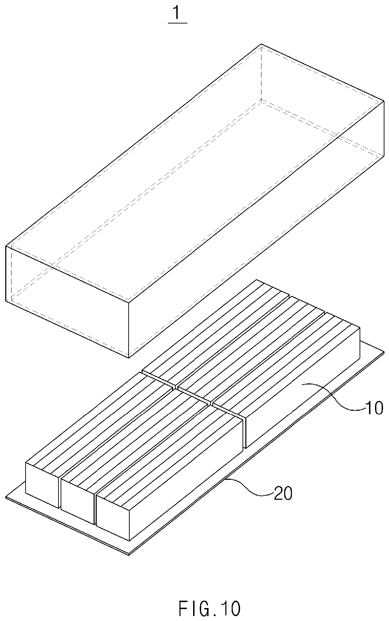

FIG. 10 is a schematic exploded perspective view of a battery pack according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

The present invention provides a battery module 10 as Embodiment 1.

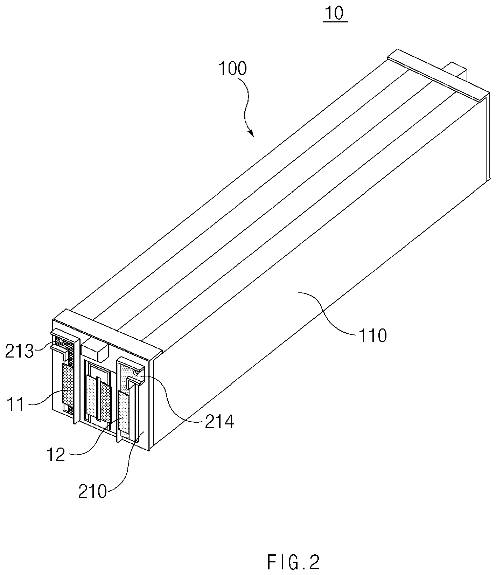

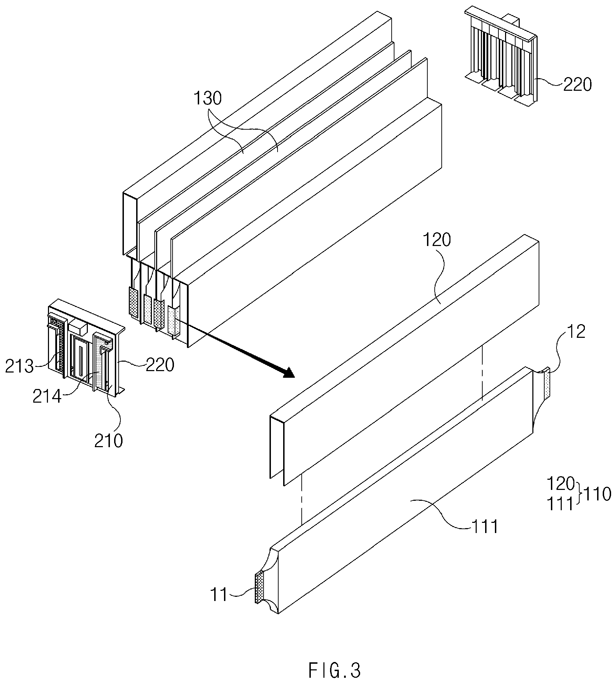

FIG. 2 is a schematic perspective view illustrating the battery module 10 according to Embodiment 1 of the present invention, and FIG. 3 is a schematic exploded perspective view of the battery module 10 according to Embodiment 1 of the present invention.

Referring to FIGS. 2 and 3, the battery module 10 according to Embodiment 1 of the present invention may include a cell unit assembly 100 and an end frame 200.

The cell unit assembly 100 of the battery module 10 according to Embodiment 1 of the present invention may include a plurality of cell units 110. Specifically, the battery module 10 may include the cell unit assembly 100 having a substantially rectangular parallelepiped shape, which includes a plurality of cell units 110, and the end frame 200 assembled on front and rear surfaces of the cell unit assembly 100.

Referring to FIGS. 2 and 3, the cell unit assembly 100 of the battery module 10 according to Embodiment 1 of the present invention may include four cell units 110. Thus, the four cell units 110 may be stacked side by side to provide the cell unit assembly 100.

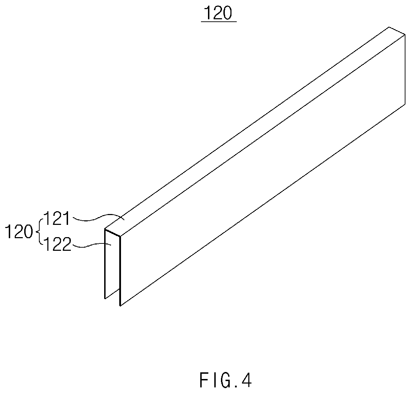

FIG. 4 is a schematic perspective view illustrating a cell cover 120 of the battery module 10 according to Embodiment 1 of the present invention.

As an example of a configuration for efficiently preventing thermal propagation between the cells, the cell unit 110 included in the cell unit assembly 100 of the battery module 10 according to Embodiment 1 of the present invention may include a cell stack 111 and a cell cover 120.

The cell stack 111 of the cell unit 110 may be provided by stacking at least one or more cells.

Preferably, for the purpose of the present invention to prevent the thermal propagation from occurring between the cells inside the battery module 10, the cell stack 111 constituting the cell unit 110 may include three or less cells. That is, the number of cells constituting the cell stack 111 may be one or more and three or less.

The cell stack 111 according to Embodiment 1 of the present invention may be provided by stacking three cells side by side. Here, the cell may be a pouch cell.

Referring to FIG. 4, the cell cover 120 of the cell unit 110 may be disposed to surround the cell stack 111. Specifically, the cell cover 120 may be disposed to surround both sides and an upper portion of the cell stack 111 in a width direction. Thus, the cell stack 111 of the cell unit 110 may be disposed inside the cell cover 120 in a state in which both ends and a lower portion thereof in a longitudinal direction are opened.

The cell cover 120 of the cell unit 110 according to Embodiment 1 of the present invention may have a substantially rectangular parallelepiped shape with three surfaces opened. Thus, the cell unit assembly 100, which is provided by stacking the cell units 110, each of which has the substantially rectangular parallelepiped shape, may also have a substantially rectangular parallelepiped shape.

As an example of the configuration surrounding the cell stack 111, the cell cover 120 of the cell unit 110 according to Embodiment 1 of the present invention may include a top plate 121 and a side plate 122.

The top plate 121 of the cell cover 120 may cover a top surface of the cell stack 111. Specifically, the top plate 121 may be disposed on the upper portion of the cell stack 111 to cover the top surface of the cell stack 111. In addition, the upper plate 121 may have a plate shape with a substantially rectangular cross-section.

The side plate 122 of the cell cover 120 may cover a side surface of the cell stack 111. Specifically, the side plate 122 may be bent to be connected to each of both ends of the upper plate 121 in the width direction and disposed at each of both the sides of the cell stack 111. Here, the top plate 121 and the side plate 122 may be connected to each other approximately vertically.

The cell cover 120 including the top plate 121 and the side plate 122 may be shared and used in various types of battery modules.

As an example of the configuration for fixing the cell stack 111, the side plate 122 of the cell cover 120 according to Embodiment 1 of the present invention may be in contact with the side surface of the cell stack 111. Specifically, the side plate 122 may be disposed so that an outer surface of the cell stack 111 and an inner surface of the side plate 122 are in contact with each other.

The cell cover 120 may include a pair of side plates 122, and a space may be defined between the pair of side plates 122. When the cell stack 111 constituted by the three cells is disposed to be in contact with the side plate 122 in this space, the cell stack 111 may be sandwiched between the pair of side plates 122. Thus, the cell stack 111 may be easily fixed between the pair of side plates 122.

As an example of the configuration for preventing the thermal propagation between the cell stacks 111, the cell cover 120 of the cell unit 110 according to Embodiment 1 of the present invention may be made of a metal material. Specifically, the cell cover 120 may be made of a highly heat-resistant metal material.

Since the cell cover 120 is made of the metal material, flame and high-temperature gas generated from the cell stack 111 of one cell unit 110 may be prevented from being propagated to other adjacent cell units 110, and the cell cover 120 may withstand internal combustion. Here, diffusion may be blocked at both the opened ends of the cell cover 120 by the end frame 200, and thus, the diffusion may be blocked at the opened lower portion of the cell cover 120 by a cooling plate 20 of the battery pack 1. This will be explained in detail later.

As an example of the configuration for delaying heat conduction between the cell units 110, the cell unit assembly 100 of the battery module 10 according to Embodiment 1 of the present invention may further include an insulating plate 130. That is, the insulating plate 130 may be selectively disposed between the adjacent cell units 110 to reduce a temperature, improve insulation performance, and relieve an impact during the stacking.

The insulating plate 130 may be disposed between the adjacent cell units 110 and may include an insulation material. In addition, the insulating plate 130 may have a plate shape with a substantially rectangular cross-section and may have the same cross-sectional area as the side plate 122 of the cell cover 120.

The insulating plate 130 may include a material with an excellent insulation effect, and examples of the insulating plate 130 may include silicone, aerogel, etc.

As an example of the configuration for efficiently delaying the heat conduction between the cell units 110, both ends of the insulating plate 130 according to Embodiment 1 of the present invention may be disposed to be in contact with the end plate based on the longitudinal direction. Thus, the adjacent cell units 110 may not be in contact with each other due to the insulating plate 130, and thus, the insulation effect may be efficiently maintained.

The cell unit assembly 100 of the battery module 10 according to Embodiment 1 of the present invention may include the insulating plate 130 to effectively delay the conduction of heat between the cell units 110.

The cell unit 110 may be provided to have an overall hexahedral shape by coupling the cell stack 111 including one or more cells to the cell cover 120, and a positive electrode lead 11 and a negative electrode lead 12 protruding from the cell stacks 111 may protrude from both sides of the cell units 110, respectively.

In addition, the end frame 200 may be provided in a state in which a busbar assembly 210, in which the electrode leads (a positive electrode lead and a negative electrode lead) of each cell stack 111 are electrically connected to the terminals 213 and 214, and the end plate 220 for protecting and finishing the cell stack 111 (especially the electrode lead portions) from external physical impact are integrally coupled to each other.

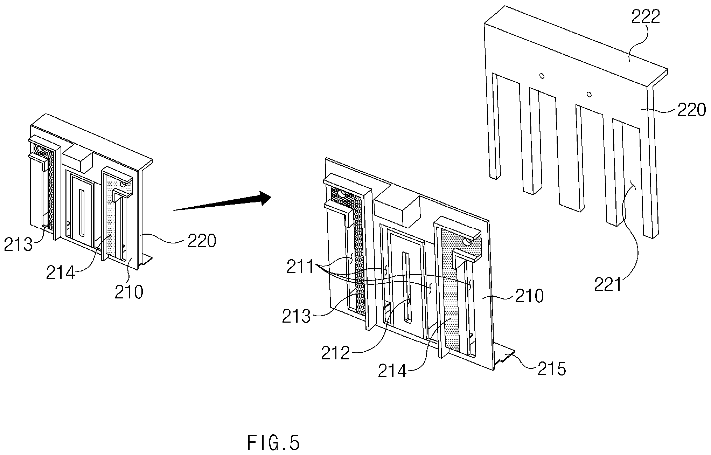

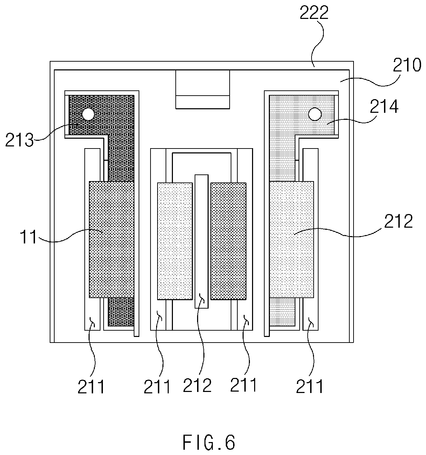

FIG. 5 is a schematic perspective view illustrating the end plate 220 of the battery module 10 according to Embodiment 1 of the present invention, and FIG. 6 is a schematic front view illustrating the battery module 10 of FIG. 2.

As an example of the configuration for fixing the cell unit assembly 100, the battery module 10 according to Embodiment 1 of the present invention may include an end frame 200.

The end frame 200 of the battery module 10 may cover both ends of the cell unit assembly 100. Specifically, both the ends of the cell unit assembly 100 may be covered based on the longitudinal direction of the cell unit 110. Thus, spread of flame through both the opened ends of the cell unit assembly 100 may be prevented by the end frame 200.

Referring to FIG. 5, the end frame 200 according to Embodiment 1 of the present invention may be disposed so that the end plate 220 is disposed at the inside and thus may be coupled closer to the cell stack 111 than the busbar assembly.

Thus, the end plate 220 may have a plurality of opening holes 221 through which the electrode leads 11 and 12 pass so that the positive electrode lead 11 and the negative electrode lead 12, which protrude from the individual cell stack 111, pass through the end plate 220 without bypassing the end plate to extend to the busbar assembly 210. The number, size, and arrangement structure of the opening holes 221 may be determined according to the positions and number of electrode leads 11 and 12. Thus, the electrode leads 11 and 12 may be connected to the busbar assembly 210 through the opening holes 221.

A plurality of first holes 211 through which the electrode leads 11 and 12 pass may also be punched in the busbar assembly 210, and thus, the electrode leads 11 and 12 may pass through the first holes 211 and be electrically connected to the terminals 213 and 214 provided on the busbar assembly 210. That is, ends of the electrode leads 11 and 12 may be connected to the terminals 213 and 214 by welding or soldering.

A second hole 212 which is spaced apart from and separated from the first hole 211 and through which the electrode leads 11 and 12 do not pass, may be additionally defined. The second hole 212 may be provided so that when a gas leaks, or flame occurs in the cell, the gas and flame leak to the outside, but a direction of the leak is adjusted so as not to cause explosion.

Referring to FIG. 6, four first holes 211 may be defined in the busbar assembly 210 of the end frame 200 according to Embodiment 1 of the present invention. Here, each of the first holes 211 may be defined to a size that is enough to define an empty space after the electrode leads 11 and 12 pass so that when the gas or flame is generated, the gas or flame are ejected through the first holes 211. In addition, the first hole 211 may be defined in a portion of the busbar assembly 210, which corresponds to the portion at which the cell unit 110 is disposed.

That is, the first hole 211 and the second hole 212 may be defined in the busbar assembly 210 according to Embodiment 1 of the present invention to prevent the cell unit 110 from being exploded.

The first hole 211 and the second hole 212 may be provided in various shapes to facilitate the gas discharge. The first hole 211 and the second hole 212 of the busbar assembly 210 according to Embodiment 1 of the present invention may be provided to have a substantially rectangular cross-section. In addition, the first hole 211 and the second hole 212 may be defined to pass from one side of the busbar assembly 210 to an opposite side.

Since the first hole 211 and the second hole 212 are defined in the busbar assembly 210 of the end frame 200 according to Embodiment 1 of the present invention, the explosion due to an increase in pressure inside the cell unit 110 may be prevented. In addition, secondary damage from the gas leaks or the flame leading to the thermal propagation may be prevented.

The busbar assembly 210 may be made of a synthetic resin material with relatively lower rigidity so that the remaining portion, excluding the terminals 213 and 214, has electrical insulation properties and a relatively light weight. On the other hand, the end plate 220 may be made of a metal material with relatively higher rigidity to protect the cell stack from an external load and impact.

Two end frames 200 may be coupled to cover both sides at which the electrode leads 11 and 12 protrude from the two cell stack 111, respectively, and the end plate 220 may be coupled to face the electrode leads 11 and 12.

Either the end plate 220 or the busbar assembly 210 may be coupled to the cell stack through other coupling means, but in this embodiment, the cell stack and the end frame may be strongly coupled to each other.

That is, the cell cover 120 provided in this embodiment may be made of a weldable metal, and a portion of the end plate 220, which is in contact with the cell cover 120 in a state of being in contact with the cell cover 120 or being temporarily fixed, may be welded to be coupled.

Here, as illustrated in FIG. 5, the busbar assembly 210 may be bent at one side thereof to provide a bent part 215, and the end plate 220 may be bent at a side opposite to the bent part 215 to provide a folded part 222 so that the cell stack is inserted into the end frame and temporarily fixed before the welding.

The end frame 200 of the battery module 10 according to Embodiment 1 of the present invention may further include components such as a busbar for electrical connection between the cell units 110.

As an example of a method in which the cell unit assembly 100 and the end frame 200 are connected, welding may be used in the battery module 10 according to Embodiment 1 of the present invention.

The cell cover 120 of the cell unit 110 included in the cell unit assembly 100 may be disposed to be in contact with the end frame 200. Specifically, both ends of the cell cover 120 in the longitudinal direction may be in contact with the end frame 200. Here, the contact portions of the cell cover 120 and the end frame 200 may be coupled to each other through the welding.

Thus, both the ends of the cell cover 120 may be disposed to be in contact with the end frame 200, and the contact portions may be welded, and thus, the cell unit assembly 100 may be fixed and coupled to the end frame 200.

When the cell unit assembly 100 is coupled to the end frame 200 through the welding, both opened surfaces of the cell unit 110 in the longitudinal direction may be covered by the end frame 200.

As previously described, the battery module 10 may include the cell unit assembly 100 and the end frame 200, and the cell unit assembly 100 may include the plurality of cell units 110 and the insulating plate 130. In addition, each cell unit 110 may include the cell stack 111 and the cell cover 120 surrounding the cell stack 111.

As described above, the battery module 10 according to Embodiment 1 of the present invention may be constituted by relatively few parts, and thus, economic efficiency of the manufacturing process may be improved, and efficiency of the manufacturing process may be improved because the assembly process is simple. In addition, the battery module 10 may prevent the explosion of the cell unit 110 due to the pressure increase and also prevent or delay spread of flame and thermal propagation between the cell units 110 to improve stability of the battery module 10. In addition, battery module structures having various capacities and sizes may be manufactured using the cell unit 110 having a certain shape.

Hereinafter, a method for manufacturing the battery module 10 according to Embodiment 1 of the present invention will be described in detail.

The method for manufacturing the battery module 10 may include a cell stack manufacturing process, an end frame manufacturing process, and a coupling process.

In the cell stack manufacturing process, a cell unit 110 may be manufactured by stacking a cell stack 111 from which electrode leads 11 and 12 protrude from both ends, respectively, along a longitudinal direction, and a cell cover 120 made of a metal.

In more detail, an electrode assembly, in which a positive electrode, a separator, and a negative electrode are repeatedly stacked, may be embedded in a pouch together with an electrolyte, and then, a charging/discharging process, an aging process, a test process, and the like may be performed according to the known method for manufacturing a cell to manufacture individual cells. Then, a cell cover 120 may be coupled to one or more cells and stacked to manufacture a cell unit 110.

Here, a positive lead 11 of the cell may protrude from one end of the pouch, and a negative lead 12 may protrude from the other end of the pouch, and the cell unit 110, in which the one or more cells and the cell cover 120 are stacked, may be manufactured to have an overall hexahedral shape.

In addition, in an end frame manufacturing process, an end plate 220 made of a metal and a busbar assembly 210 made of a synthetic resin may be manufactured to be integrated with each other.

The end plate 220 made of the metal may be manufactured through metal processing methods such as casting, forging, cutting, rolling, and milling. In addition, the end plate 220 manufactured first may be inserted into an injection mold and then manufactured to be integrated with the busbar assembly 210 through an insert molding method in which a polymer resin is injected to the outside of the end plate 220.

The polymer resin externally injected into the end plate 220 may be cooled to form an outer appearance of the busbar assembly 210, and after the cooling, terminals 213 and 214 and the like may be additionally mounted to manufacture the busbar assembly 210.

Alternatively, in addition to the above insert injection, the end frame 200 may be manufactured through another manufacturing method of integrally molding the metal material and the synthetic resin material. If the end plate 220 is made of a synthetic resin material rather than the metal material, the end plate 220 may be manufactured using a method such as two shot molding, which manufactures various types of synthetic resin materials as one piece. Alternatively, the end frame 200 may also be manufactured by separately manufacturing the end plate 220 using the metal material and then manufacturing the busbar assembly 210 using the synthetic resin material and then bonding the end plate 220 to the busbar assembly 210 through an adhesive.

In addition, the coupling process in which the end frame 200 is coupled to the cell unit assembly 100 by welding the end plate 220 to the cell cover 120 may be performed.

The end plate 220 and the cell cover 120 provided in this embodiment may be made of metals that are coupled to being welded to each other. Thus, the coupling may be achieved by welding the end plate 220 to the cell cover 120 while the end plate 220 is in contact with the cell cover 120.

Here, the welding with the end plate 220 may be possible even if there is at least one cell cover 120, but it is preferable that the cell cover 120 is provided to be coupled to each cell stack 111 so as to be welded as continuously as possible along an edge of the end plate 220.

Thus, according to the related art, the end plate may be disposed at the outermost side, and the busbar assembly and the end plate may be individually coupled to each other, but in the present invention, the end plate 220 and the busbar assembly 210 may be manufactured to be integrated with each other, and then, the end plate 220 may be fixed to the cell stack to reduce the assembly process.

In the present invention having the above configuration, the end plate 220 and the busbar assembly 210 may be coupled to provide one end frame 200, and thus, when compared to the structure according to the related art in which the busbar assembly 210 and the end plate 220 may be mounted separately, the assembly process may be simplified to further improve the production efficiency.

In addition, since a mono frame and a stack plate are removed from the structure according to the related art, the assembly process may be simplified to reduce a weight.

The end frame 200 may be coupled so that the end plate 220 is disposed closer to the cell stack than the busbar assembly 210, and thus, a fixing point of the end plate 220 and the cell stack may be disposed relatively inside, and a wasted space may not be provided to more improve energy density per volume of the battery module.

An opening hole 221 may be formed in the end plate 220, and a first hole 211 and a second hole 212 may be formed in the busbar assembly 210. Thus, even if a gas leak or flame occurs in the cell unit assembly 100, the gas or flame may be discharged to the outside through the first hole 211 and the second hole 212 to prevent thermal propagation from occurring.

One or more cell covers 120 may be stacked on the cell unit 110 together with the cell stack 111 to increase in rigidity of the cell unit 110 itself. In addition, the cell cover 120 and the end plate 220 may be made of the metals and be coupled to each other by the welding to simplify the assembly process.

For example, in the structure according to the related art, when the busbar assembly and the electrode lead are welded, and when the mono frame and the end plate are welded after the welding of the electrode lead is completed, the installation of the welding jig may be separately required (although the installation of the welding jig is required at least twice). However, in the present invention, when the cell cover 120 and the end plate 220 are welded, the busbar assembly 210 and the electrode leads 11 and 12 may also be welded at the same time, and thus, the number of times of installations and disassembly of the welding jigs may be reduced.

### Embodiment 2

The present invention provides another type of battery module 10' as Embodiment 2.

A battery module 10' according to Embodiment 2 of the present invention is different from the battery module 10 according to Embodiment 1 of the present invention in that the number of cells constituting a cell stack, the number of cell units 110' constituting a cell unit assembly 100', a shape of an end frame 200', and an assembly method of cell cover 120' and an end frame 200'.

Hereinafter, a detailed description of the same configuration as that of the battery module 10 according to Embodiment 1 of the present invention will be omitted.

FIG. 5 is a schematic perspective view illustrating an end plate of the battery module 10' according to Embodiment 2 of the present invention.

The battery module 10' according to Embodiment 2 of the present invention may include a cell unit assembly 100' and an end frame 200'. Here, the cell unit assembly 100' may include twelve cell units 110'.

FIG. 6 is a schematic perspective view illustrating the cell cover 120' of the battery module 10' according to Embodiment 2 of the present invention.

The cell unit 110' according to Embodiment 2 of the present invention may include a cell and a cell cover 120'. Specifically, the cell unit 110' may include one cell and a cell cover 120' surrounding the cell. Here, the cell may be disposed so that a free space is defined between an outer surface of the cell and an inner surface of the cell cover 120'.

The cell cover 120' may include a top plate 121' and a side plate 122' bent and connected to the top plate 121'. Here, the top plate 121' may cover an upper portion of the cell, and the side plate 122' may cover both sides of the cell. The cell cover 120' may have a substantially rectangular parallelepiped shape with three opened sides, like Embodiment 1.

As an example of the configuration for preventing explosion of the cell unit 110', a gas discharge hole 123 may be defined in the upper plate 121' of the cell cover 120' according to Embodiment 2 of the present invention.

Referring to FIG. 6, the gas discharge hole 123 may be defined at each of both ends of the upper plate 121' in a longitudinal direction. Thus, two gas discharge holes 123 may be defined in the upper plate 121' of the cell cover 120' according to Embodiment 2 of the present invention.

The gas discharge hole 123 may be provided in various shapes to facilitate a discharge of a gas. The gas discharge hole 123 of the upper plate 121' according to Embodiment 2 of the present invention may be defined to have an approximately circular cross-section.

The gas discharge hole 123 may be defined to pass from one surface of the upper plate 121' facing the cell to the other surface that is opposite to the cell. Thus, a high-temperature gas generated due to ignition of the cell in the cell unit 110' may be discharged from the inside of the cell unit 110' to the outside of the cell unit 110'.

Since the gas discharge hole 123 is defined in the upper plate 121' of the cell cover 120' according to Embodiment 2 of the present invention, explosion due to an increase in pressure inside the cell unit 110' may be prevented. In addition, secondary damage from the gas leaks or the flame leading to the thermal propagation may be prevented.

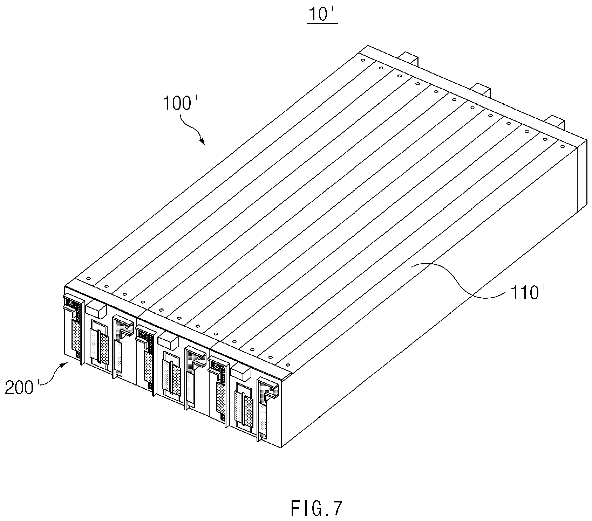

FIG. 7 is a schematic perspective view illustrating the battery module according to Embodiment 2 of the present invention.

As an example of the configuration for fixing the cell unit assembly 100', the battery module 10' according to Embodiment 2 of the present invention may include an end frame 200'. In addition, when compared to Embodiment 1, the cell unit assembly 100' according to Embodiment 2 may include a larger number of cell units 110', and thus, a horizontal length of the end frame 200' according to Embodiment 2 may be longer than that of the end frame 200 according to Embodiment 1.

As an example of a method in which the cell unit assembly 100' and the end frame 200' are connected, the cell unit assembly 100' according to Embodiment 2 of the present invention may be inserted between a folded part 222' of the end plate 220' and a bent part 215' of the busbar assembly 210' .

A space may be defined between the folded portion 222' and the bent part 215', which extend in parallel to each other. Here, the cell unit assembly 100' may have the same height as the height of this space. Therefore, when both ends are disposed to be in contact with the end plate 220' of the end frame 200', the cell unit assembly 100' may be inserted into the space between the folded part 222' and the bent part 215', and thus, the unit assembly 100' may be fixed to the end frame 200'.

The battery module 10' according to Embodiment 2 of the present invention may prevent the explosion of the cell unit 110' due to the increase in pressure and prevent or delay spread of flame between the cell units 110' to improve stability of the module 10' and efficiency of the battery module 10' in the manufacturing process by simplifying the coupling of the cell unit assembly 100' and the end frame 200'. In addition, battery module structures having various capacities and sizes may be manufactured using the cell unit 110 having a certain shape.

### Embodiment 3

The present invention provides a battery pack 1 as Embodiment 3.

FIG. 1 is a schematic exploded perspective view of the battery pack 1 according to Embodiment 3 of the present invention.

The battery pack 1 according to Embodiment 3 of the present invention may include a battery module 10 and a cooling plate 20.

In order to provide a large amount of electrical energy, the battery pack 1 in which a plurality of battery modules 10 are assembled may be used. Thus, the battery pack 1 according to Embodiment 3 of the present invention may include a plurality of battery modules 10 according to Embodiment 1. Specifically, the battery pack 1 may include six battery modules 10.

The cooling plate 20 of the battery pack 1 may be disposed below the plurality of battery modules 10. Here, the cooling plate 20 may have a plate shape with a substantially rectangular cross-section, and the cooling plate 20 may cover an opened lower portion of the battery module 10.

The cooling plate 20 may further include a cooling passage through which coolant for cooling passes. Thus, the cooling plate 20 may efficiently reduce a temperature of the cells placed inside the battery module 10 through the opened lower portion.

The battery pack 1 according to Embodiment 3 of the present invention may further include a case for covering an upper portion of the battery modules 10 and additional components for electrically connecting the battery modules 10 to each other.

The battery pack 1 illustrated in Embodiment 3 of the present invention is only an example. Therefore, the effect of the present invention may be achieved through the battery packs having various structures including different types of battery modules or different numbers of battery modules.

While Embodiments of the present invention have been described with reference to the specific embodiments, it will be apparent to those skilled in the art that various changes and modifications may be made without departing from the spirit and scope of the invention as defined in the following claims.

### [Description of the Symbols]

1: Battery pack
10, 10': Battery module
11: Positive electrode lead
12: Negative electrode lead
20: Cooling plate
100, 100': Cell unit assembly
110, 110': Cell unit
111: Cell stack
120, 120': Cell cover
121, 121': Upper plate
122, 122': Side plate
123: Gas discharge hole
130: Insulating plate
200, 200': End frame
210, 210': Busbar assembly
211: First hole
212: Second hole
213, 214: Terminal
215, 215': Bent part
220, 220': End plate
221: Opening hole
222, 222': Folded part

## Claims

1. A battery module comprising:
a cell unit assembly comprising a plurality of cell units; and
an end frame configured to cover both ends of the cell unit assembly based on a longitudinal direction of the cell units,
wherein the cell unit comprises:
a cell stack, in which at least one or more cells are stacked; and
a cell cover configured to surround both side portions and an upper portion in a width direction of the cell stack.

2. The battery module of claim 1, wherein the cell cover comprises:
an upper plate disposed above the cell stack to cover a top surface of the cell stack; and
a side plate connected to be bent from the upper plate to cover a side surface of the cell stack.

3. The battery module of claim 2, wherein the side plate is disposed to be in contact with the side surface of the cell stack.

4. The battery module of claim 2, wherein a gas discharge hole is defined in both ends of the upper plate based on the longitudinal direction.

5. The battery module of claim 1, wherein the cell stack comprises one or more and three or less cells.

6. The battery module of claim 1, wherein the cell cover is made of a metal material.

7. The battery module of claim 1, wherein the cell cover is disposed to be in contact with the end frame.

8. The battery module of claim 7, wherein a portion of the cell cover, which is in contact with the end frame, is welded.

9. The battery module of claim 1, wherein the cell unit assembly further comprises an insulating plate disposed between the adjacent cell units and comprising an insulating material.

10. The battery module of claim 9, wherein both ends of the insulating plate are disposed to be in contact with the end frame based on the longitudinal direction.

11. A battery pack comprising:
the battery module of any one of claims 1 to 10; and
a cooling plate disposed below the plurality of battery modules,
wherein the cooling plate is configured to cover an opened lower portion of the battery module.

12. A battery module comprising:
a cell stack in which a plurality of cells, from which an electrode lead protrudes from each of both ends in a longitudinal direction, are stacked; and
an end frame to which an end plate coupled to each of both the ends of the cell stack and a busbar assembly which is coupled to the end plate and to which the electrode lead of each cell is electrically connected, are coupled.

13. The battery module of claim 12, wherein the end frame is coupled so that the end plate is disposed closer to the cell stack than the busbar assembly.

14. The battery module of claim 13, wherein an opening hole through which the electrode lead passes is defined in the end plate so that the electrode lead is connected to the busbar assembly through the opening hole.

15. The battery module of claim 14, wherein a plurality of first holes are punched in the busbar assembly, and
the electrode lead passes through each of the first holes so as to be electrically connected to a terminal provided on the busbar assembly.

16. The battery module of claim 15, wherein a second hole which is spaced apart from the first hole and through which the electrode lead does not pass is additionally defined in the busbar assembly.

17. The battery module of claim 15, wherein the first hole is provided to a size that is enough to provide an empty space after the electrode lead passes.

18. The battery module of claim 13, wherein the bus bar assembly is made of a synthetic resin material with relatively lower rigidity, and the end plate is made of a metal material with relatively higher rigidity.

19. The battery module of claim 12, wherein one side of the busbar assembly is bent to provide a bent part, and the end plate is bent to an opposite side of the bent part to provide a folded part.

20. A method for manufacturing a battery module, the method comprising:
a cell stack manufacturing process of manufacturing a cell stack by stacking cells, from which an electrode lead protrudes to each of both ends in a longitudinal direction, and a cell cover made of a metal material;
an end frame manufacturing process of manufacturing an end frame to which an end plate made of a metal material and a busbar assembly which is coupled to the end plate and to which the electrode lead of each cell is electrically connected are coupled; and
a coupling process of coupling the end frame to the cell stack by welding the end plate to the cell cover.
